Europäisches Patentamt

European Patent Office

Office européen des brevets

(19)

(11) Veröffentlichungsnummer: **0 138 266**
A2

(12) # EUROPÄISCHE PATENTANMELDUNG

(21) Anmeldenummer: **84201424.3**

(22) Anmeldetag: **05.10.84**

(51) Int. Cl.⁴: **B 65 D 77/20**, B 65 D 43/04

(30) Priorität: **18.10.83 IT 6807983**

(43) Veröffentlichungstag der Anmeldung: **24.04.85**
**Patentblatt 85/17**

(84) Benannte Vertragsstaaten: **AT BE CH DE FR GB IT LI NL SE**

(71) Anmelder: **UNILEVER NV, Burgemeester s'Jacobplein 1 P.O. Box 760, NL-3000 DK Rotterdam (NL)**
(84) Benannte Vertragsstaaten: **BE CH DE FR IT LI NL SE AT**

(71) Anmelder: **UNILEVER PLC, Unilever House Blackfriars P O Box 68, London EC4P 4BQ (GB)**
(84) Benannte Vertragsstaaten: **GB**

(72) Erfinder: **Zerhau, Walter, Billwerder Bilideich 441, D-2050 Hamburg 80 (DE)**
Erfinder: **von Tempelhoff, Georg Friedrich, Fuchsweg 2, D-7913-Senden-Wullenstetten (DE)**

(74) Vertreter: **Keppels, Willem Richard Engelbertus Gerardus, Drs. et al, Unilever N.V. Patent Division P.O.Box 137, NL-3130 AC Vlaardingen (NL)**

(54) **Behälter mit Deckel.**

(57) Behälter (1) verschlossen mit einem Innenklemmdeckel (2), beide aus thermoplastischem Kunststoff, die mittels einer zwischen nach außen weisenden, wenigstens größtenteils ebenen Ringflanschen (5 bzw. 7) gebildeten Verbundschleife (9) mit einander verbunden sind und der Behälterringflansch (7) eine innerhalb der Verbundschleife (7) liegende Aufreiß-schwächungslinie (8) aufweist. Zur Erleichterung des Öffnens auch bei Verwendung von zähem Kunststoffmaterial ist wenig-stens der Behälterringflansch (7) über wenigstens einem Teil seines Umfangs mit einem aus der Ebene dieses Flansches gebogenen abgebogenen Teil (11) versehen.

## Behälter mit Deckel

Die Erfindung betrifft einen Behälter verschlossen mit einem Innenklemmdeckel, wobei der Deckel und der Behälter, die beide aus einem thermoplastischen Kunststoff hergestellt sind, mittels einer zwischen nach aussen weisenden, wenigstens grösstenteils ebenen Ringflanschen gebildeten Verbundschleife miteinander verbunden sind und der Behälterringflansch eine innerhalb der Verbundschleife liegende Aufreissschwächungslinie aufweist.

Derartige Behälter sind in der belgischen Patentschrift 872 051 beschrieben und dargestellt und finden, meistens aus sprödem Material wie Polystyrol hergestellt, allgemein Verwendung als becher- oder schachtelförmige Verpackungen für Lebensmittel. Diese Behälter sind leicht zu öffnen indem durch Biegungsbeanspruchung der Behälterringflansch die Schwächungslinie aufgerissen und sodann der Deckel entfernt wird. Bei Verwendung von weniger sprödem Material wie verschiedene propylenpolymerenenthaltende Kunststoffe vergrössert sich beim Biegen die Reissfestigkeit des Materials und wird das Offnen ohne Hilfsmittel schwierig bzw. unmöglich. Auch die Anordnung einer Aufreisslasche, wie an sich aus obiger belgischen Patentschrift ebenfalls bekannt, bietet keine Aushilfe.

Aufgabe der Erfindung ist auf einfacher und billiger Weise das Offnen der anfangs beschriebenen Behälter zu erleichtern auch wenn diese Behälter aus zähem oder zäh, werdendem Material hergestellt sind.

Zur Lösung dieser Aufgabe sieht die Erfindung vor, dass wenigstens der Behälterringflansch über wenigstens

0138266
U 7003 (R)

einem Teil seines Umfangs mit einem aus der Ebene dieses Flansches gebogenen, abgebogenen Teil versehen ist.

In einer bevorzugten Ausführungsform ist der abgebogene Teil wie eine sich über einem Teil des Behälterumfangs erstreckende Aufreisslasche mit einer abwärts abgebogenen Verlängerung ausgeführt. Damit die auf der Lasche ausgeübten Kräfte richtig auf dem Bereich der Schwächungslinie auswirken, ist vorzugsweise im zwischen der Lasche und der Verlängerung gebildeten Winkel eine Versteifung vorgesehen. Diese Versteifung erstreckt sich am besten bis zur Aufreissschwächungslinie. In einer einfach herstellbaren und zuverlässigen Ausführungsform wird die Versteifung durch mehrere radialen, etwa dreieckigen Querrippen gebildet.

In einer alternativen Ausführungsform erstreckt sich die Versteifung um den ganzen Behälterumfang und umfasst einen abwärts gebogenen, abgestumpft kegeligen Ringteil. In einer vorgezogenen Ausführungsform der Erfindung ist der Deckel mit einem sich um den ganzen Deckelumfang erstreckenden, aufwärts gebogenen, abgestumpft kegeligen Ringteil versehen.

Der kegeligen Ringteil bzw. die beiden kegeligen Ringteile ist bzw. sind bevorzugt durch Umformung beim Schweissvorgang aus dem entsprechenden flachen Ringflansch bzw. der flachen Ringflanschengeformt.

In einer zusätzlich vorgezogenen Ausführungsform ist der erfindungsgemässe Behälter aus einem Propylenpolymer hergestellt.

Die Erfindung bezieht sich zudem auf ein Verfahren zur Herstellung eines geschlossenen Behälters wie im Vorangehenden beschrieben, wobei die beiden Flanschen aufeinander gedrückt und durch Energiezufuhr auf den aufeinandergedrückten Stellen verschweisst werden. Beim herkommlichen Verfahren überragen die zum Andrücken verwendeten Werkzeugen die Flanschen, die demzufolge flach bleiben und leicht biegbar sind. Erfindungsgemäss wird jedoch bevorzugt derart verfahren, dass die Aussenbegrenzung des aufeinandergedrückten Gebiets überall wenigstens 1,5 mm von der Aussenbegrenzung der Flanschen entfernt ist.

Zu diesem Zweck ist vorzugsweise die Aussenbegrenzung von wenigstens dem unteren der zum Aufeinanderdrücken der Flanschen verwendeten Werkzeugen wenigstens 1,5 mm von der Aussenbegrenzung des entsprechenden Flansches entfernt.

Die Erfindung wird im Anschluss anhand einer Anzahl Bildern einiger vorgezogenen Ausführungsformen des erfindungsgemässen Behälters näher beschrieben, wobei

Fig. 1 eine Perspektivdarstellung einer Ausführungsform von einem Behälter mit einem Deckel nach der Erfindung,

Fig. 2 einen Teilschnitt entlang der Linie II-II in Fig. 1,

Fig. 3 eine Unteransicht eines Details des Behälters nach Fig. 1,

Fig. 4 einen Teilschnitt durch einen geschlossenen Behälter in einer alternativen Ausführungsform und

Fig. 5 eine Anordnung der Schweisswerkzeuge zur Herstellung des geschlossenen Behälters nach Fig. 4 zeigt.

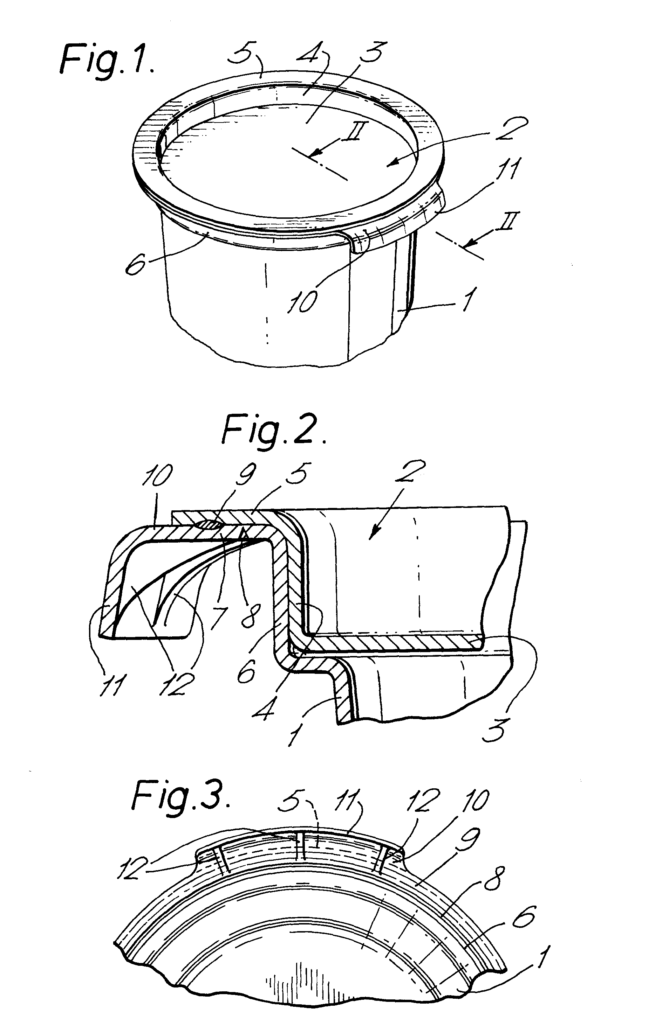

In den Figuren 1-3 ist einen becherförmigen Behälter 1 dargestellt, der mit einem Innenklemmdeckel 2 verschlossen ist. Dieser Deckel ist mit einem z.B. flachen Mittenteil 3, einem zylindrischen Innenklemmrand 4 und einer nach aussen weisenden, ebenen Ringflansch 5 versehen, während der abgestumpft kegelförmige Becher 1 an der Oberrand einen zylindrischen Aussenklemmrand 6 und einen ebenen Ringflansch 7 aufweist. In dem unteren Becherringflansch 7 ist eine an der Unterseite mündende Schwächungslinie bzw. -kerbe 8 angeordnet. Die beiden Flansche 5,7 sind mittels einer Schweissverbindung 9 ausserhalb der Schwächungslinie verbunden.

Der Becherflansch 7 ist örtlich mit einer Aufreisslasche 10, die am Ende eine abwärts abgebogene Verlängerung 11 aufweist versehen.

Beim Offnen des Behälters braucht die Aufreisslasche 10 nur hochgezogen zu werden, wobei die dabei ausgeübten Kräfte direkt auf dem Bereich der Schwächungslinie 8 ausgeübt werden.

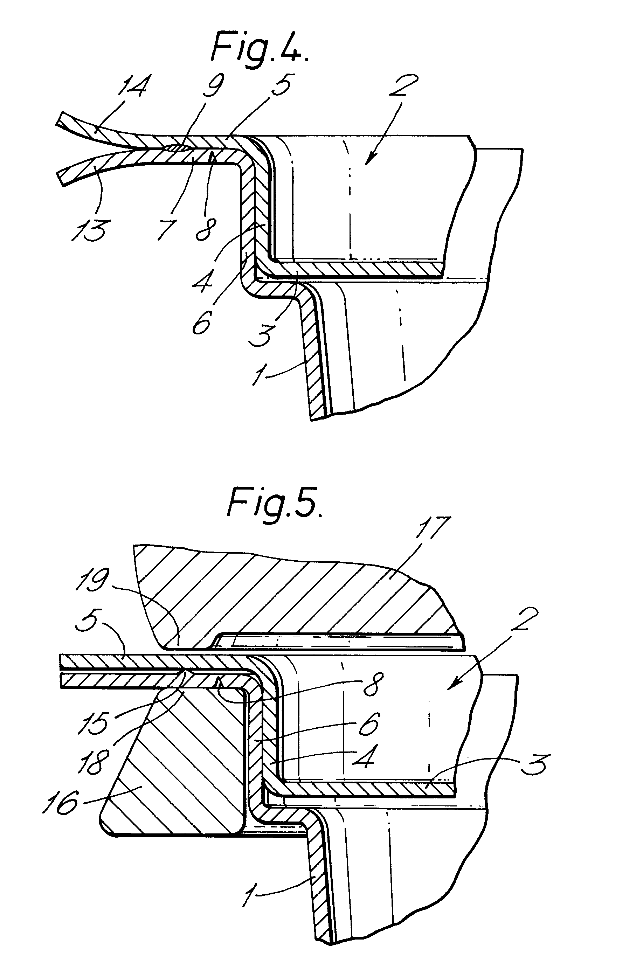

In den Figuren 4 und 5 ist eine Alternativausführungsform dargestellt. Sowohl der becherförmige Behälter 1 als der Deckel 2 weisen anfangs je einen ringförmigen, ebenen Ringflansch 7, 5 auf. Der Becherflansch 7 weist wieder die Schwächungslinie 8 auf. Der Becherflansch 7 und vorzugsweise auch der Deckelflansch 5 ist versteift indem der Aussenbereich jedes Flanches einen abwärts bzw. aufwärts gebogenen abgestumpft kegeligen Ringteil 13 bzw. 14 bildet.

Vorteilhaft können diese gebogenen Ringteile 13 bzw. 14 dirch Umformung beim Schweissvorgang aus dem betreffenden flachen Ringflansch 7 bzw. 5 geformt werden.

0138266
U 7003 (R)

Zur Bildung dieser Ringteile kann, wie in Fig. 5 schematisch dargestellt, verfahren werden. Auf der Oberfläche des Behälterflansches 7 ist normalerweise ein Schweisskamm 15 angeordnet, der beim Gegeneinanderdrücken der Schweisswerkzeugen, z.B. Sonotrode 17 und Gegenhalter 16, unter Energiezufuhr mit dem anderen Flansch 5 unter Bildung der schleifenförmigen Verbundstelle 9 verbunden wird.

Indem beim Schweissvorgang das Flanschmaterial bei der sich bildenden Verbundstelle erweicht wird, die Schweisswerkzeugen kräftig gegeneinandergedrückt werden und die Aussenbegrenzungen 18 bzw. 19 der Schweisswerkzeugen, d.h. die Aussenbegrenzungen der Arbeitsflächen, innerhalb der Aussenumrissen der Flanschen 5 bzw. 7 liegen, bilden sich die in Fig. 4 dargestellten abgebogenen Ringteile 13 bzw. 14, die durch Versteifung der Flanschen den späteren Oeffnungsvorgang erleichtern.

0138266

PATENTANSPRUECHE

1.     Behälter verschlossen mit einem Innenklemmdeckel, wobei der Deckel und der Behälter die beide aus
einem thermoplastischen Kunststoff hergestellt sind
mittels einer zwischen nach aussen weisenden Ringflanschen gebildeten Verbundschleife miteinander
verbunden sind und der Behälterflansch eine innerhalb
der Verbundschleife liegende Aufreissschwächungslinie
aufweist, dadurch gekennzeichnet, dass wenigstens der
Behälterringflansch über wenigstens einem Teil seines
Umfangs mit einem aus der Ebene dieses Flansches
gebogenen, abgebogenen Teil versehen ist.

2.     Behälter nach Anspruch 1, dadurch gekennzeichnet, dass der Abgebogenen Teil wie eine sich über
einem Teil des Behälterumfangs erstreckende Aufreisslasche (10) mit einer abwärts abgebogenen Verlängerung
(11) ausgeführt ist.

3.     Behälter nach Anspruch 2, dadurch gekennzeichnet, dass in zwischen der Lasche (10) und der
Verlängerung (11) gebildeten Winkel eine Versteifung
vorgesehen ist.

4.     Behälter nach Anspruch 3, dadurch gekennzeichnet, dass die Versteifung (12) sich bis zur
Aufreissschwächungslinie (8) erstreckt.

5.     Behälter nach Anspruch 3 oder 4, dadurch
gekennzeichnet, dass die Versteifung durch mehrere
radialen, etwa dreieckigen Querrippen (12) gebildet
wird.

6.     Behälter nach Anspruch 1, dadurch gekennzeichnet, dass die Versteifung sich um den ganzen
Behälterumfang erstreckt und einen abwärts gebogenen,
abgestumpft kegeligen Ringteil (13) umfasst.

7.      Behälter nach Anspruch 1 oder 6, dadurch gekennzeichnet, dass der Deckel (2) mit einem sich um den ganzen Deckelumfang erstreckenden, aufwärts gebogenen, abgestumpft kegeligen Ringteil (14) versehen ist.

8.      Behälter nach Anspruch 6 oder 7, dadurch gekennzeichnet, dass der kegeligen Ringteil bzw. die beiden kegeligen Ringteile durch Umformung beim Schweissvorgang aus dem flachen Ringflansch bzw. den flachen Ringflanschen geformt ist bzw. sind.

9.      Behälter nach einem der Ansprüche 1 bis 8, dadurch gekennzeichnet, dass dieser aus einem kerbzähen Propylenpolymer hergestellt ist.

10.     Verfahren zur Herstellung eines geschlossenen Behälters nach Anspruch 6 und 7, wobei die beiden Flanschen aufeinander gedrückt und durch Energiezufuhr auf den aufeinandergedrückten Stellen verschweisst werden, dadurch gekennzeichnet, dass die Aussenbegrenzung des aufeinandergedrückten Gebiets überall wenigstens 1,5 mm von der Aussenbegrenzung der Flanschen entfernt ist.

11.     Verfahren nach Anspruch 10, dadurch gekennzeichnet, dass die Aussenbegrenzung von wenigstens demunteren der zum Aufeinanderdrücken der Flanschen (5, 7) verwendeten Werkzeugen (16, 17) wenigstens 1,5 mm von der Aussenbegrenzung des entsprechenden Flansches (7 bzw. 5) entfernt ist.

Fig.1.

Fig.2.

Fig.3.

0138266

Fig.4.

Fig.5.